# EUROPEAN PATENT APPLICATION

(11) **EP 4 810 996 A1**
(43) Date of publication of application: **23.09.2026**
(21) Application number: 26165431.3
(22) Date of filing: 17.03.2026
(51) Int. Cl.: G01S 13/76, G01S 13/82

(54) **COMMUNICATION DEVICE AND METHOD FOR PERFORMING SENSING**

(30) Priority: 20.03.2025 US 202563775267 P; 10.03.2026 TW 115108709
(71) Applicant: Realtek Semiconductor Corp., HsinChu 30076 (TW)
(72) Inventor: Liu, Der-Zheng, 30076 HsinChu (TW); Cheng, Shau-Yu, 30076 HsinChu (TW); Yu, Cho-Han, 30076 HsinChu (TW)
(74) Representative: Straus, Alexander

(57) **Abstract**

A communication device (10) for performing sensing includes at least one storage device (110) configured to store instructions, and at least one processing circuit (100) configured to execute the instructions of: transmitting a plurality of first packets (202); receiving a plurality of second packets corresponding to the plurality of first packets (204); determining a plurality of channel frequency responses (CFRs) according to the plurality of first packets and the plurality of second packets, respectively (206); transforming the plurality of CFRs into a plurality of channel impulse responses (CIRs) (208); determining at least one distance of a target object according to a CIR (210); compensating the plurality of CIRs to generate a plurality of compensated CIRs (212); transforming the plurality of compensated CIRs into a plurality of compensated CFRs (214); and determining at least one velocity of the target object according to the plurality of compensated CFRs (216).

## Description

### Field of the Invention

The present invention relates to a communication device and a method used in a wireless communication system, and more particularly, to a communication device and a method for performing sensing.

### Background of the Invention

The main sensing methods of current wireless communication systems are the bi-static mode and the monostatic mode. In the bi-static mode, signal transmission and reception are performed by two different communication devices, while in the monostatic mode, signal transmission and reception are performed by the same communication device. Compared to the monostatic mode, the bistatic mode has lower sensing accuracy due to differences between the transmitting communication device and the receiving communication device, such as initial phase, transmission energy, frequency offset, and time synchronization. In the monostatic mode, the communication device performs sensing by transmitting contiguous signals. However, there is no method for the communication device to perform sensing in the monostatic mode by transmitting non-contiguous signals.

### Summary of the Invention

This in mind, the present invention aims at providing a communication device and a method for performing sensing to solve the abovementioned problem.

This is achieved by a communication device and a method for performing sensing according to the independent claims, respectively. The dependent claims pertain to corresponding further developments and improvements.

As will be seen more clearly from the detailed description following below, a claimed communication device for performing sensing comprises: at least one storage device, configured to store instructions; and at least one processing circuit, coupled to the at least one storage device and configured to execute the instructions of: transmitting a plurality of first packets; receiving a plurality of second packets corresponding to the plurality of first packets; determining a plurality of channel frequency responses (CFRs) according to the plurality of first packets and the plurality of second packets, respectively; transforming the plurality of CFRs into a plurality of channel impulse responses (CIRs); determining at least one distance of a target object according to a CIR of the plurality of CIRs; compensating the plurality of CIRs to generate a plurality of compensated CIRs; transforming the plurality of compensated CIRs into a plurality of compensated CFRs; and determining at least one velocity of the target object according to the plurality of compensated CFRs.

A claimed method for performing sensing comprises: transmitting a plurality of first packets; receiving a plurality of second packets corresponding to the plurality of first packets; determining a plurality of channel frequency responses (CFRs) according to the plurality of first packets and the plurality of second packets, respectively; transforming the plurality of CFRs into a plurality of channel impulse responses (CIRs); determining at least one distance of a target object according to a CIR of the plurality of CIRs; compensating the plurality of CIRs to generate a plurality of compensated CIRs; transforming the plurality of compensated CIRs into a plurality of compensated CFRs; and determining at least one velocity of the target object according to the plurality of compensated CFRs.

### Brief Description of the Drawings

In the following, the invention is further illustrated by way of example, taking reference to the following drawings.
FIG. 1 is a schematic diagram of a communication device according to an example of the present invention.
FIG. 2 is a flowchart of a process according to an example of the present invention.
FIG. 3 is a schematic diagram of a channel impulse response according to an example of the present invention.

### Detailed Description

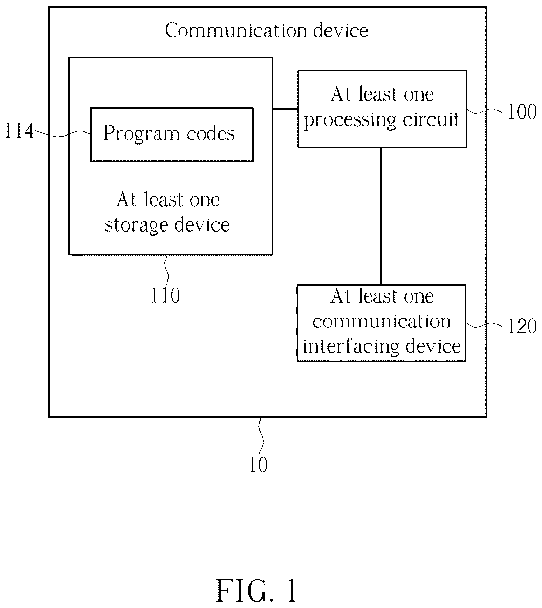

FIG. 1 is a schematic diagram of a communication device 10 according to an example of the present invention. The communication device 10 may include at least one processing circuit 100, at least one storage device 110 and at least one communication interfacing device 120. The at least one processing circuit 100 may be a microprocessor or Application Specific Integrated Circuit (ASIC). The at least one storage device 110 may be any data storage device that may store program codes 114, accessed and executed by the at least one processing circuit 100. Examples of the at least one storage device 110 include, but are not limited to, a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 120 may include at least one transmitter (e.g., transmitting antenna) and at least one receiver (e.g., receiving antenna) and is used to transmit and receive signals (e.g., data, messages and/or packets) according to processing results of the at least one processing circuit 100.

The communication device may be applied in a wireless communication system. The wireless communication system includes, but is not limited to, a wireless local area network (WLAN) (e.g., Wi-Fi), a personal area network (PAN) (e.g., Bluetooth (BT)), a Digital Video Broadcasting (DVB) system, a Long Term Evolution (LTE) system, a LTE-advanced (LTE-A) system or a 5th generation wireless systems (5G) system.

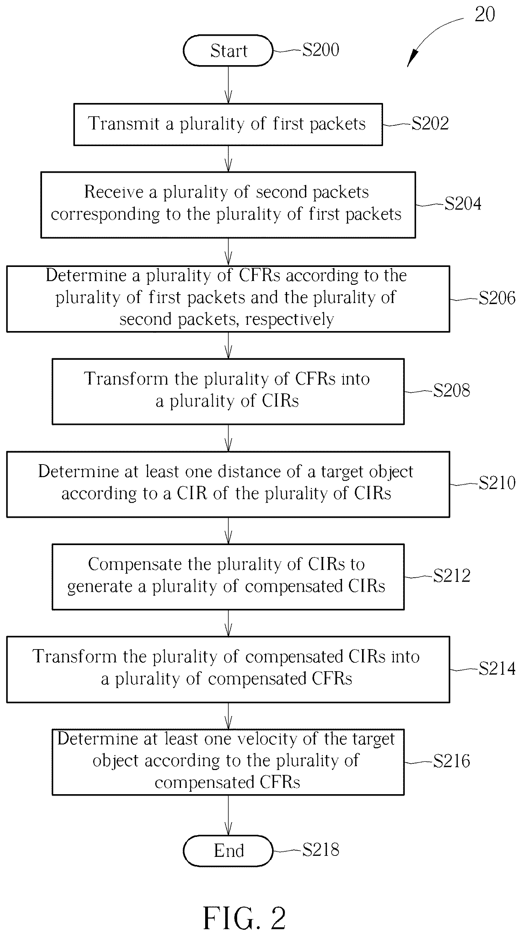

FIG. 2 is a flowchart of a process 20 according to an example of the present invention. The process 20 may be utilized in a communication device (e.g., the communication device 10 in FIG. 1) operating in a monostatic mode, to perform sensing. The process 20 may be compiled into the program codes 114 and includes the following steps:

| | |
|---|---|
| Step S200: | Start. |
| Step S202: | Transmit a plurality of first packets. |
| Step S204: | Receive a plurality of second packets corresponding to the plurality of first packets. |
| Step S206: | Determine a plurality of channel frequency responses (CFRs) according to the plurality of first packets and the plurality of second packets, respectively. |
| Step S208: | Transform the plurality of CFRs into a plurality of channel impulse responses (CIRs). |
| Step S210: | Determine at least one distance of a target object according to a CIR of the plurality of CIRs. |
| Step S212: | Compensate the plurality of CIRs to generate a plurality of compensated CIRs. |
| Step S214: | Transform the plurality of compensated CIRs into a plurality of compensated CFRs. |
| Step S216: | Determine at least one velocity of the target object according to the plurality of compensated CFRs. |
| Step S218: | End. |

According to the process 20, the plurality of first packets are a plurality of non-contiguous packets. The communication device obtains information about the target object (e.g., distance and/or velocity at different time delays) by compensating and analyzing the channel response.

Realization of the process 20 is not limited to the above description. The following examples may be applied to realize the process 20.

In one example, the plurality of second packets are a plurality of non-contiguous packets. In one example, the plurality of second packets are packets received by the communication device after the plurality of first packets have passed through a plurality of transmission paths (e.g., transmission path(s) reflected by the target object, transmission path(s) of the internal circuit/hardware of the communication device and/or a line-of-sight (LOS) transmission path between the transmitter and the receiver). In one example, the plurality of first packets and the plurality of second packets are time-domain signals. In one example, the communication device transforms the plurality of CFRs into the plurality of CIRs via an inverse Fast Fourier Transform (IFFT).

In one example, the CIR comprises a plurality of first impulses. In one example, the Step S210 comprises at least one of the following steps: selecting a plurality of second impulses from the plurality of first impulses of the plurality of CIRs, wherein an energy (or a power) of each impulse of the plurality of second impulses is greater than a threshold; selecting an LOS impulse from the plurality of second impulses; selecting at least one impulse from the plurality of second impulses; computing at least one relative time delay according to at least one time delay corresponding to the at least one impulse and an LOS time delay corresponding to the LOS impulse; and computing the at least one distance of the target object according to at least one of the at least one relative time delay, the LOS time delay and a velocity of light. In one example, the LOS impulse has a maximum energy (or maximum power) among the plurality of second impulses. In one example, the at least one impulse is later than the LOS impulse (e.g., in a time domain). In one example, the at least one distance is distance(s) between the communication device and the target object under the at least one time delay. In one example, a number of the plurality of second impulses is not greater than a number of the plurality of first impulses. In one example, the communication device dynamically adjusts the threshold.

In one example, the Step S212 comprises at least one of the following steps: determining a plurality of LOS impulses of the plurality of CIRs; computing a plurality of phase compensation parameters and a plurality of amplitude compensation parameters according to the plurality of LOS impulses, respectively; and compensating the plurality of CIRs according to the plurality of phase compensation parameters and the plurality of amplitude compensation parameters, respectively, to generate the plurality of compensated CIRs. In one example, the plurality of LOS impulses correspond to the plurality of CIRs, respectively. That is, the communication device compensates other impulses of the CIR based on the LOS impulse to eliminate mismatches in the circuit or the hardware of the communication device.

In one example, the Step S212 comprises at least one of the following steps: computing a plurality of time differences of the plurality of first packets (or the plurality of second packets) according to a time interval; computing a plurality of phase differences of the plurality of first packets (or the plurality of second packets) according to the plurality of time differences, respectively (e.g., via an interpolation method); and compensating the plurality of CIRs according to the plurality of phase differences, respectively, to generate the plurality of compensated CIRs. In one example, the time interval is a time interval between two adjacent packets of the plurality of first packets that the communication device is expected to transmit (or between two adjacent packets of the plurality of second packets that the communication device is expected to receive). That is, the communication device computes the time difference of the first packet (or the second packet) to compensate the phase change caused by the time difference.

In one example, the communication device transforms the plurality of compensated CIRs into the plurality of compensated CFRs via a Fast Fourier Transform (FFT). In one example, a number of the plurality of first packets is a size of the FFT. In one example, a number of the plurality of second packets is the size of the FFT.

In one example, the Step S216 comprises at least one of the following steps: computing a Doppler shift according to the plurality of compensated CFRs; and computing the at least one velocity of the target object according to at least one of the Doppler shift, the velocity of light and a subcarrier frequency. In one example, the at least one velocity is velocity/velocities of the target object under the at least one time delay.

The following first example is used for illustrating how the communication device senses distance(s) of the target object. First, a frequency-domain transmitted signal S(f) is composed of a plurality of subcarriers. The communication device transforms the frequency-domain transmitted signal into a time-domain transmitted signal (e.g., a first packet of the plurality of first packets) via the IFFT, and transmits the time-domain transmitted signal. The time-domain transmitted signal s(t) can be expressed as the equation (Eq. 1): $s \left(t\right) = {\sum }_{k = 0}^{N - 1} {S}_{k} {e}^{j 2 πk Δ ft} , 0 \leq t < {T}_{s}$ wherein *Sₖ* is a frequency-domain symbol of the k-th subcarrier, Δ*f* is a subcarrier spacing, N is a number of the subcarriers, and *Tₛ* is a length of the time-domain transmitted signal *s*(*t*). After the time-domain transmitted signal s(t) passes M transmission paths, the communication device receives a time-domain received signal r(t) (e.g., a second packet of the plurality of second packets). The time-domain received signal r(t) can be expressed as the equation (Eq. 2): $r \left(t\right) = s \left(t\right) ∗ h \left(t\right) + n \left(t\right)$ wherein *h(t)* is a CIR, and n(t) is an Additive White Gaussian Noise (AWGN). The time-domain received signal r(t) is transformed into a frequency-domain received R(*f*) signal via the FFT as follows: $R \left(f\right) = S \left(f\right) H \left(f\right) + N \left(f\right)$

In the case that the frequency-domain transmitted signal *S*(*f*) is known, the communication device obtains a CFR *H*(*f*) (e.g., a CFR of the plurality of CFRs) via the equation (Eq. 3). The CFR *H*(*f*) can be expressed as the equation (Eq. 4): $H \left(f\right) = \frac{R \left(f\right)}{S \left(f\right)} - \frac{N \left(f\right)}{S \left(f\right)}$

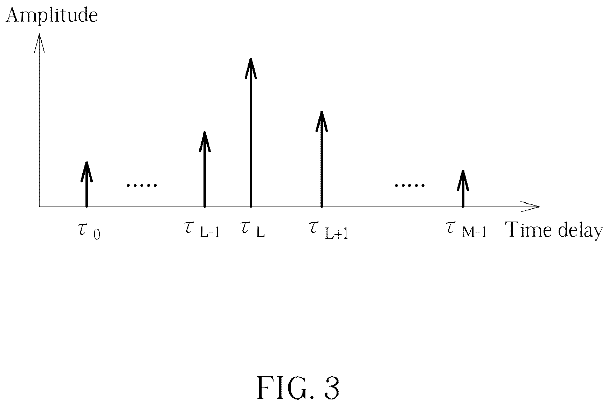

Then, the CFR H(*f*) is transformed into a CIR *h*(*t*) (e.g., a CIR of the plurality of CIRs) via the IFFT as follows: $h \left(t\right) = IFFT \left(H\left(f\right)\right) = {\sum }_{i} {a}_{i} δ \left(t-{τ}_{i}\right)$ wherein *i* is an index for the transmission paths, 0 ≤ *i < M, aᵢ* is an amplitude of the i-th transmission path, and *τᵢ* is a time delay of the i-th transmission path. The CIR *h*(*t*) can be known by referring to FIG. 3, but is not limited herein. In FIG. 3, a horizontal axis represents time delays of the transmission paths, and a vertical axis represents amplitudes of the transmission paths. The CIR *h*(*t*) is composed of M impulses, and the M impulses correspond to M transmission paths, respectively. The communication device computes an energy of each impulse in the CIR *h*(*t*)*,* as shown in the equation (Eq. 6): $p \left(t\right) = {\sum }_{i} {\left|{a}_{i}\right|}^{2} δ \left(t-{τ}_{i}\right)$ wherein *p*(*t*) reflects the energy |*aᵢ*|² of the i-th impulse (or the i-th transmission path) under the time delay *τᵢ.* From the impulses (e.g., the plurality of first impulses) in the CIR *h*(*t*)*,* the communication device selects impulses (e.g., the plurality of second impulses) with energies greater than a threshold to perform subsequent operations. That is, the communication device ignores the impulse(s) with the energy/energies not greater than the threshold.

For ease of subsequent computations, it is assumed that the energy of each impulse in the CIR *h*(*t*) is greater than the threshold. From the impulses with the energies greater than the threshold, the communication device selects an impulse with a maximum energy as an LOS impulse. The LOS impulse corresponds to a straight transmission path from a transmitter of the communication device to a receiver of the communication device, which can be seen in FIG. 3 as an impulse corresponding to a time delay *τ_{L}.* The impulses earlier than the LOS impulse correspond to transmission paths of the internal leakage of the communication device (e.g., leakage from the transmitter to the receiver), which can be seen in FIG. 3 as impulses corresponding to time delay *τ*₀-*τ*_{*L*-1}. The impulses later than the LOS impulse correspond to transmission paths of the signal reflected by the target object, which can be seen in FIG. 3 as impulses corresponding to time delay *τ*_{*L*+1}*-τ*_{*M*-1}*.* The impulses earlier than the LOS impulse are irrelevant to the target object, and can therefore be ignored.

Then, using the time delay *τ_{L}* (e.g., the LOS time delay) corresponding to the LOS impulse as a reference, the communication device computes a relative time delay τ*_{relative,i}*, as shown in the equation (Eq. 7): ${τ}_{relative , i} = {τ}_{i} - {τ}_{L}$ wherein *L < i < M.* The communication device computes a relative distance *d_{relative,i}* and a distance compensation parameter *d_{offset}* according to a relationship between the velocity of light c and time, as shown in the equations (Eq. 8) and (Eq. 9): ${d}_{relative , i} = \frac{c ⋅ {τ}_{relative , i}}{2}$ ${d}_{offset} = \frac{c ⋅ {τ}_{L}}{2}$ wherein *L < i* < *M*, and *c* = 3 × 10⁸ (m/s). The communication device obtains a distance *dᵢ* according to the relative distance *d_{relative,i}* and the distance compensation parameter *d_{offset}.* The distance *dᵢ* can be expressed as the equation (Eq. 10): ${d}_{i} = {d}_{relative , i} + {d}_{offset}$ wherein the distance *dᵢ* is between the communication device and the target object under the time delay *τᵢ*, and *L < i < M.*

The following second example is used for illustrating how the communication device senses velocity/velocities of the target object. In the first example, the communication device transits one time-domain transmitted signal *s*(*t*)*,* and receives one time-domain received signal r(*t*). In the second example, the communication device transits *N* time-domain transmitted signals *sₙ*(*t*), and receives *N* time-domain received signals *rₙ*(*t*), wherein 0 ≤ *n* < *N.* The *N* time-domain transmitted signals *sₙ*(*t*) are non-contiguous signals, i.e., there is a time interval between two adjacent time-domain transmitted signals transmitted by the communication device. Then, after receiving the *N* time-domain received signals *rₙ*(*t*), the communication device transforms the *N* time-domain received signals *rₙ*(*t*) into *N* frequency-domain received signals *Rₙ*(*f*) and obtains *N* CIRs *hₙ*(*t*). Details of the frequency-domain received signals *Rₙ*(*f*) and the CIRs *hₙ*(*t*) can be known by referring to the equations (Eq. 1) - (Eq. 5), and are not narrated herein for brevity. The communication device determines *N* LOS impulses of the *N* CIRs *hₙ*(*t*). The communication device computes the phase compensation parameters *φ_{comp,n}* and the amplitude parameters *A_{comp,n}* according to the *N* LOS impulses, as shown in the equations (Eq. 11) and (Eq. 12): ${φ}_{comp , n} = ∠ {h}_{n} \left({τ}_{L}\right)$ ${A}_{comp , n} = \left|{h}_{n}\left({τ}_{L}\right)\right|$ wherein *hₙ*(*τ_{L}*) is the n-th LOS impulse, and *τ_{L}* is a time delay corresponding to the n-th LOS impulse. The communication device performs the first compensation on the *N* CIRs *hₙ*(*t*) according to the phase compensation parameters *φ_{comp,n}* and the amplitude parameters *A_{comp,n}* to generate *N* compensated CIRs ${h}_{n}^{′} \left(t\right)$ (e.g., the plurality of compensated CIRs). The compensated CIRs ${h}_{n}^{′} \left(t\right)$ can be expressed as the equation (Eq. 13): ${h}_{n}^{′} \left(t\right) = \frac{{h}_{n} \left(t\right)}{{A}_{comp , n}} {e}^{- j {φ}_{comp , n}}$ wherein 0 ≤ *n < N.*

Assuming that a time interval *Tₙ* is between the n-th time-domain transmitted signal *sₙ*(*t*) and the previous time-domain transmitted signal *s*_{*n*-1}(*t*), the time interval *Tₙ* can be expressed as the equation (Eq. 14): ${T}_{n} = T + {t}_{n}^{′}$ wherein *T* is a time interval that the communication device expects, and ${t}_{n}^{′}$ is time differences (e.g., the plurality of time differences). The communication device computes phase differences $∠ {h}_{n}^{"} \left({τ}_{i}\right)$ (e.g., the plurality of phase differences) according to the time differences ${t}_{n}^{′}$ as follows: $∠ {h}_{n}^{"} \left({τ}_{i}\right) = ∠ {h}_{n - 1}^{′} \left({τ}_{i}\right) + \left(∠{h}_{n}^{′}\left({τ}_{i}\right)-∠{h}_{n - 1}^{′}\left({τ}_{i}\right)\right) \times \frac{T}{{T}_{n}}$

The communication device performs the second compensation on the compensated CIRs ${h}_{n}^{′} \left(t\right)$ according to the phase differences $∠ {h}_{n}^{"} \left({τ}_{i}\right)$ to generate compensated CIRs ${h}_{n}^{"} \left(t\right)$ (e.g., the plurality of compensated CIRs). It should be noted that, in the compensation method described in the equations (Eq. 11) - (Eq. 13) and their related descriptions, the communication device performs the compensation on the impulses *hₙ*(*τᵢ*) (*i* ≠ *L*) based on the LOS impulse *hₙ*(*τ_{L}*) to eliminate the mismatch in the circuit or the hardware of the communication device. In the compensation method described in the equations (Eq. 14) - (Eq. 15) and their related descriptions, the communication device computes the time differences for the time-domain transmitted signal, and compensates the phase changes caused by the time differences via the interpolation method. The above two compensation methods can improve the sensing accuracy.

Then, the communication device performs the FFT on the compensated CIRs ${h}_{n}^{"} \left(t\right)$ to obtain compensated CFRs *H_{d}*(*f_{d}*) (e.g., the plurality of compensated CFRs) and the Doppler shift *f_{d}.* The compensated CFRs *H_{d}*(*f_{d}*) can be expressed as the equation (Eq. 16): ${H}_{d} \left({f}_{d}\right) = {\sum }_{n = 0}^{N - 1} {h}_{n}^{"} \left({τ}_{i}\right) {e}^{- j 2 {πf}_{d} nT}$

The communication device computes the velocity of the target object according to the equations (Eq. 17) and (Eq. 18): ${f}_{d} = \frac{2 {vf}_{c}}{c}$ $v = \frac{{cf}_{d}}{2 {f}_{c}}$

The operation of "determine" described above may be replaced by the operation of "compute", "calculate", "obtain", "generate", "output, "use", "choose/select", "decide" or "is configured to". The operation of "compute" described above may be replaced by calculate". The phrase "according to" described above may be replaced by "in response to". The term "corresponding to" described above may be replaced by "of" or "associated with". The term "via" described above may be replaced by "on", "in" or "at".

Those skilled in the art may readily make combinations, modifications and/or alterations based on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or any combination thereof. An example of the means may be the communication device.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or any combination thereof. In another example, the hardware may include general-purpose processor(s), microprocessor(s), controller(s), digital signal processor(s) (DSP(s)) or any combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or any combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, the communication device obtains CIRs by transmitting and receiving non-contiguous packets. Then, the communication device compensates the CIRs to eliminate the mismatch caused by the initial phase, the time delays, and the circuit/hardware, which improves the sensing accuracy. The communication device determines information of the target object (e.g., distance and/or velocity) according to the compensated CIRs.

## Claims

1. A communication device (10) for performing sensing, **characterized by:**
at least one storage device (110), configured to store instructions; and
at least one processing circuit (100), coupled to the at least one storage device (110) and configured to execute the instructions of:
transmitting a plurality of first packets (202);
receiving a plurality of second packets corresponding to the plurality of first packets (204);
determining a plurality of channel frequency responses, CFRs, according to the plurality of first packets and the plurality of second packets, respectively (206);
transforming the plurality of CFRs into a plurality of channel impulse responses, CIRs (208);
determining at least one distance of a target object according to a CIR of the plurality of CIRs (210);
compensating the plurality of CIRs to generate a plurality of compensated CIRs (212);
transforming the plurality of compensated CIRs into a plurality of compensated CFRs (214); and
determining at least one velocity of the target object according to the plurality of compensated CFRs (216).

2. The communication device (10) of claim 1, **characterized in that** the plurality of second packets are packets received by the communication device (10) after the plurality of first packets have passed through a plurality of transmission paths.

3. The communication device (10) of claim 1 or 2, **characterized in that** the communication device (10) transforms the plurality of CFRs into the plurality of CIRs via an inverse Fast Fourier Transform, IFFT.

4. The communication device (10) of any of claims 1-3, **characterized in that** the instruction of determining the at least one distance of the target object according to the CIR of the plurality of CIRs comprises at least one of the following instructions:
selecting a plurality of second impulses from a plurality of first impulses of the plurality of CIRs, wherein an energy of each impulse of the plurality of second impulses is greater than a threshold;
selecting a line of sight, LOS, impulse from the plurality of second impulses;
selecting at least one impulse from the plurality of second impulses;
computing at least one relative time delay according to at least one time delay corresponding to the at least one impulse and an LOS time delay corresponding to the LOS impulse; and
computing the at least one distance of the target object according to at least one of the at least one relative time delay, the LOS time delay and a velocity of light.

5. The communication device (10) of any of claims 1-4, **characterized in that** the instruction of compensating the plurality of CIRs to generate the plurality of compensated CIRs comprises at least one of the following instructions:
determining a plurality of LOS impulses of the plurality of CIRs;
computing a plurality of phase compensation parameters and a plurality of amplitude compensation parameters according to the plurality of LOS impulses, respectively; and
compensating the plurality of CIRs according to the plurality of phase compensation parameters and the plurality of amplitude compensation parameters, respectively, to generate the plurality of compensated CIRs.

6. The communication device (10) of any of claims 1-5, **characterized in that** the instruction of compensating the plurality of CIRs to generate the plurality of compensated CIRs comprises at least one of the following instructions:
computing a plurality of time differences of the plurality of first packets according to a time interval;
computing a plurality of phase differences of the plurality of first packets according to the plurality of time differences, respectively; and
compensating the plurality of CIRs according to the plurality of phase differences, respectively, to generate the plurality of compensated CIRs.

7. The communication device (10) of any of claims 1-6, **characterized in that** the communication device (10) transforms the plurality of compensated CIRs into the plurality of compensated CFRs via a Fast Fourier Transform, FFT.

8. The communication device (10) of any of claims 1-7, **characterized in that** the instruction of determining the at least one velocity of the target object according to the plurality of compensated CFRs comprises at least one of the following instructions:
computing a Doppler shift according to the plurality of compensated CFRs; and
computing the at least one velocity of the target object according to at least one of the Doppler shift, a velocity of light and a subcarrier frequency.

9. A method for performing sensing, **characterized by:**
transmitting a plurality of first packets (202);
receiving a plurality of second packets corresponding to the plurality of first packets (204);
determining a plurality of channel frequency responses, CFRs, according to the plurality of first packets and the plurality of second packets, respectively (206);
transforming the plurality of CFRs into a plurality of channel impulse responses, CIRs (208);
determining at least one distance of a target object according to a CIR of the plurality of CIRs (210);
compensating the plurality of CIRs to generate a plurality of compensated CIRs (212);
transforming the plurality of compensated CIRs into a plurality of compensated CFRs (214); and
determining at least one velocity of the target object according to the plurality of compensated CFRs (216).

10. The method of claim 9, **characterized in that** the plurality of CFRs are transformed into the plurality of CIRs via an inverse Fast Fourier Transform, IFFT.

11. The method of claim 9 or 10, **characterized in that** the step of determining the at least one distance of the target object according to the CIR of the plurality of CIRs comprises at least one of the following steps:
selecting a plurality of second impulses from a plurality of first impulses of the plurality of CIRs, wherein an energy of each impulse of the plurality of second impulses is greater than a threshold;
selecting a line of sight, LOS, impulse from the plurality of second impulses;
selecting at least one impulse from the plurality of second impulses;
computing at least one relative time delay according to at least one time delay corresponding to the at least one impulse and an LOS time delay corresponding to the LOS impulse; and
computing the at least one distance of the target object according to at least one of the at least one relative time delay, the LOS time delay and a velocity of light.

12. The method of any of claims 9-11, **characterized in that** the step of compensating the plurality of CIRs to generate the plurality of compensated CIRs comprises at least one of the following steps:
determining a plurality of LOS impulses of the plurality of CIRs;
computing a plurality of phase compensation parameters and a plurality of amplitude compensation parameters according to the plurality of LOS impulses, respectively; and
compensating the plurality of CIRs according to the plurality of phase compensation parameters and the plurality of amplitude compensation parameters, respectively, to generate the plurality of compensated CIRs.

13. The method of any of claims 9-12, **characterized in that** the step of compensating the plurality of CIRs to generate the plurality of compensated CIRs comprises at least one of the following steps:
computing a plurality of time differences of the plurality of first packets according to a time interval;
computing a plurality of phase differences of the plurality of first packets according to the plurality of time differences, respectively; and
compensating the plurality of CIRs according to the plurality of phase differences, respectively, to generate the plurality of compensated CIRs.

14. The method of any of claims 9-13, **characterized in that** the plurality of compensated CIRs are transformed into the plurality of compensated CFRs via a Fast Fourier Transform, FFT.

15. The method of any of claims 9-14, **characterized in that** the step of determining the at least one velocity of the target object according to the plurality of compensated CFRs comprises at least one of the following steps:
computing a Doppler shift according to the plurality of compensated CFRs; and
computing the at least one velocity of the target object according to at least one of the Doppler shift, a velocity of light and a subcarrier frequency.
